(19) Europäisches Patentamt
European Patent Office
Office européen des brevets

(11) **EP 1 262 432 A2**

(12) **EUROPÄISCHE PATENTANMELDUNG**

(43) Veröffentlichungstag:
04.12.2002 Patentblatt 2002/49

(51) Int Cl.7: **B65G 57/22**

(21) Anmeldenummer: 02011630.7

(22) Anmeldetag: **29.05.2002**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **29.05.2001 DE 10126059**

(71) Anmelder: **Schaefer Förderanlagen- und Maschinenbau GmbH**
**85774 Unterföhring (DE)**

(72) Erfinder:
• **Prechtl, Robert**
**85521 Ottobrunn (DE)**
• **Kötzinger, Hubert**
**80469 München (DE)**

(74) Vertreter: **Stahl, Gerhard F.W.**
**Patentanwalt Dipl.-Ing. Gerhard F.W. Stahl**
**Heilmannstrasse 10**
**81479 München (DE)**

(54) **Verfahren und Vorrichtung zur Bildung einer Schicht aus zwei oder mehr Reihen von Behältern**

(57)    Die Erfindung betrifft ein Verfahren zur Bildung einer Schicht aus zwei oder mehr Reihen von Behältern, die einen sich verjüngenden Endbereich aufweisen. Die Behälter werden in Reihen zugeführt, und die Behälter der benachbarten Reihen werden in Zuführrichtung in einem Abstand a>=0 gegeneinander versetzt hängend angeordnet. Die Reihen weisen in vertikaler Richtung einen Abstand auf, der größer ist als die Höhe der Behälter und ihr horizontaler Abstand quer zur Zuführrichtung entspricht dem Abstand b benachbarter Reihen in der zu bildenden Schicht. Die Behälter der Reihen werden in vertikaler Richtung einander angenähert, bis sie in einer gemeinsamen horizontalen Ebene angeordnet sind, wobei die Behälter bei der Annäherung von ihren sich verjüngenden Endbereichen geführt und zentriert werden.

$$c = 2b \qquad b = \frac{d}{2}\sqrt{3}$$

*Fig. 5*

**Beschreibung**

Die Erfindung betrifft ein Verfahren zur Bildung einer Schicht aus zwei oder mehr Reihen von Behältern, die einen sich verjüngenden Endbereich aufweisen, gemäß dem Oberbegriff des Patentanspruchs 1 sowie eine Vorrichtung zur Durchführung des Verfahrens.

Bekannt ist ein Verfahren, bei dem Behälter über einen Zuführförderer einoder mehrbahnig in eine Umsetzvorrichtung geleitet werden. Die Umsetzvorrichtung schiebt die Behälter reihenweise auf einen Sammeltisch. Die leicht versetzt zueinander angeordneten Behälterreihen werden sodann auf dem Sammeltisch durch eine horizontale Bewegung zu einer kompletten Lage verdichtet. Das Übersetzen der kompletten Lage auf eine Palette kann mittels unterschiedlicher Verfahren, wie z. B. Klemmen, Greifen und Saugen erfolgen.

Aus der DE 43 25 199 C1 ist ein gattungbildendes Verfahren bekannt, bei dem Flaschen auf dem Weg von einem Luftförderer ein- oder mehrbahnig reihenweise in einen als Leistengreifer ausgebildeten Palettierkopf eingeschleust werden. Dabei wird durch unterschiedliche Haltepositionen ein geringfügiger Versatz der Reihen zueinander gebildet. Das Verdichten der Reihen zu einer kompletten Lage erfolgt durch eine horizontale Annäherung der die Flaschenreihen erfassenden Halteorgane (Greiferleisten). Danach erfolgt das Übersetzen der kompletten Lage mittels eines Hubwerks auf die Palette.

In der Praxis hat sich herausgestellt, daß die horizontale Verdichtung der Behälter bei den bekannten Verfahren kritisch und aufwendig ist. Bei dem erstgenannten Verfahren sind die Behälter auf dem Tisch nicht sicher abgestützt und können durch äußere Einflüsse, wie z. B. Luftzug oder Erschütterungen leicht umkippen. Bei dem gattungsbildenen Verfahren kann es dazu kommen, daß die Behälter (Flaschen) infolge einer Beschleunigung oder Verzögerung in den Greiferleisten nicht exakt vertikal, sondern schief hängen, wodurch eine ordentliche Verdichtung verhindert wird. Aus diesen Gründen ist die Zuverlässigkeit, aber auch die Leistungsfähigkeit der bekannten Verfahren stark eingeschränkt, da wegen der erläuterten Instabilität der Behälter entsprechend langsam gearbeitet werden muß.

Der Erfindung liegt die Aufgabe zugrunde, das gattungsgemäße Verfahren hinsichtlich der Zuverlässigkeit und der Leistungsfähigkeit zu steigern.

Erfindungsgemäß wird diese Aufgabe mit einem Verfahren gemäß den Merkmalen des Patentanspruchs 1 gelöst.

Durch das vertikale Annähern der Behälter der beiden Reihen können die verjüngten Endbereiche der Behälter benutzt werden, um eine geführte Bewegung zu erreichen. Ein sehr gutes Ineinanderfinden der Behälter ist deshalb auch dann möglich, wenn diese etwas schief hängen.

Der Anspruch 2 ist auf eine Weiterbildung des erfindungsgemäßen Verfahrens gerichtet, welche die Bildung einer aus einer Vielzahl von Behälter bestehenden mehrreihigen kompletten Lage ermöglicht.

Vorrichtungen zur Durchführung des erfindungsgemäßen Verfahrens sind in den Ansprüchen 3 bis 12 angegeben.

Ein bevorzugtes Ausführungsbeispiel der Erfindung ist in den Zeichnungen dargestellt und wird nachfolgend näher erläutert. Es zeigt:

Fig. 1 eine schematische Draufsicht auf eine teilweise beladene Palette,

Fig. 2 eine Vorderansicht einer Greiferleiste mit dem dieser zugeordneten Zuführ- und Abzugsförderer,

Fig. 3 einen Querschnitt eines Zuführ- oder Abzugsförderers,

Fig. 4 eine Seitenansicht einer Be- und Entpalettiervorrichtung,

Fig. 5 eine Vorderansicht der Be- und Entpalettiervorrichtung und

Fig. 6 einen Ausschnitt aus Fig. 5 in größerem Maßstab.

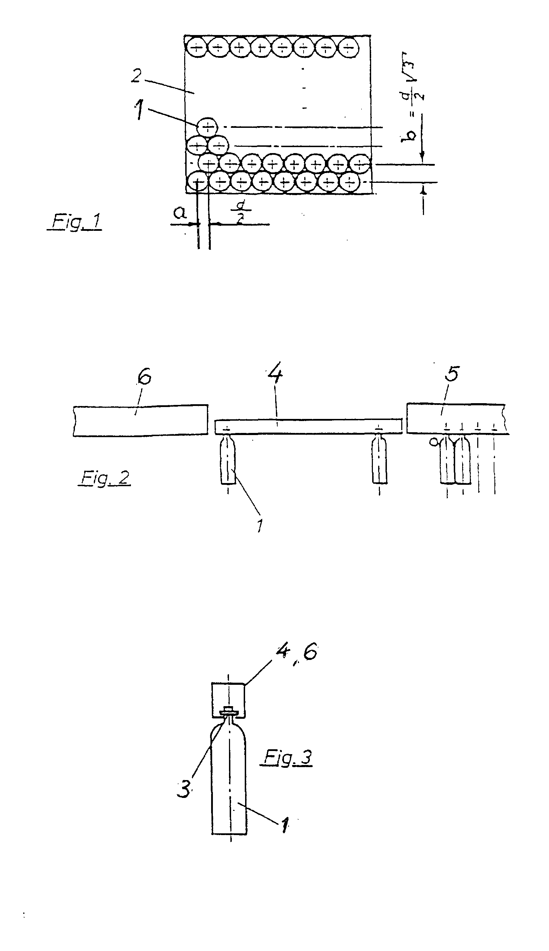

In Fig. 1 ist eine mit Flaschen 1 beladene Palette 2 in der Draufsicht gezeigt. Es ist erkennbar, daß die Flaschen 1 in nebeneinenanderliegenden Reihen dicht an dicht angeordnet sind. Dabei sind die Flaschen zweier benachbarter Reihen unter einem Abstand

$$a = d/2$$

gegeneinander versetzt angeordnet, wobei d dem Durchmesser der Flaschen entspricht. Zwei benachbarte Reihen von Flaschen weisen in horizontaler Richtung einen Abstand

$$b = \sqrt{3} \times d/2$$

auf. Durch den seitlichen Versatz zweier Reihen läßt sich die größtmögliche Dichte der in einer Lage oder Schicht angeordneten Flaschen 1 erreichen. Bei den Flaschen 1 handelt es sich um rotationssymmetrische Flaschen aus Kunststoff, die einen Kragen 3 aufweisen. Die Flaschen 1 werden reihenweise am Kragen 3 hängend zuoder abgeführt. Zu diesem Zweck sind für jede Reihe einer Schicht eine Greiferleiste 4 und ein mit dieser fluchtender Zuführ- und Abzugsförderer 5 bzw. 6 vorgesehen, die beide pneumatisch arbeiten. Der Zuführförderer 5 und der Abzugsförderer 6 besteht, wie in Fig. 3 gezeigt, aus einem rechteckigen Profilrohr mit einem unteren Längsschlitz, so daß zwei Flansche gebildet werden, auf denen die Flaschen 1 mit ihren Kragen 3 aufliegen. Die Flaschen 1 werden in hängendem Zustand unter dem Einfluß einer Luftströmung transportiert, die von (nicht gezeigten) geneigten Luftdüsen erzeugt wird, die in die Förderer 5 bzw. 6 eingesetzt sind. Die zwischen den Förderern 5 und 6 angeordnete Greiferleiste 4 weist zwei bewegliche Greifarme 7 auf, die den Kragen 3 jeder Flasche 1 untergreifen können.

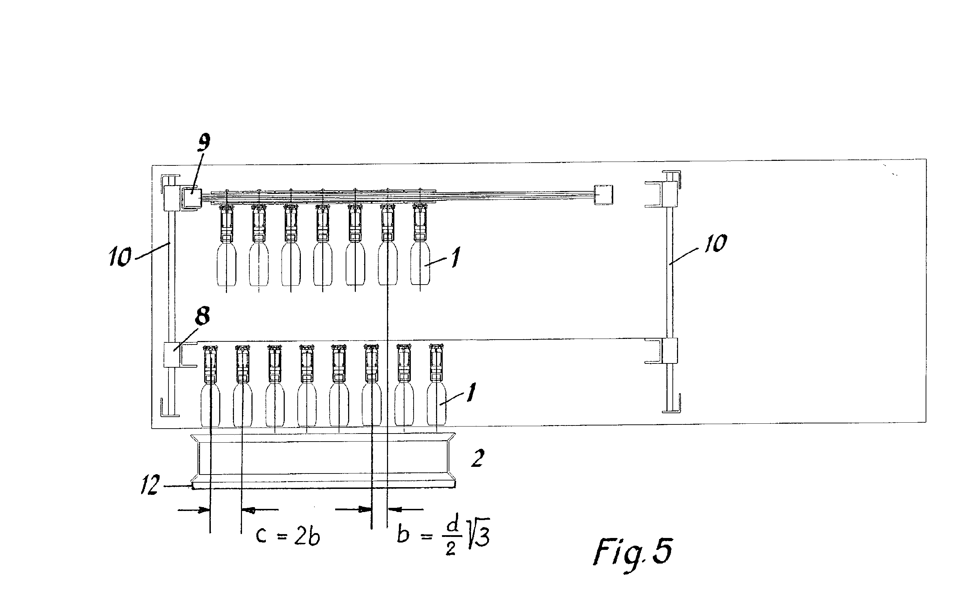

Die zur Bildung der Reihen von Flaschen 1 dienenden Greiferleisten 4 sind gruppenweise in einem unteren und einem oberen Greiferkopf 8 bzw. 9 zusammengefaßt (siehe Fig. 5). Die beiden Greiferköpfe 8 und 9 sind mittels (nicht gezeigter) Antriebe in einem Gestell 10 vertikal verschiebbar gelagert. Die im unteren Greiferkopf 8 und im oberen Greiferkopf 9 angeordneten Greiferleisten 4 sind jeweils mit Anschlägen 11 versehen, die um den Abstand

$$a = d/2$$

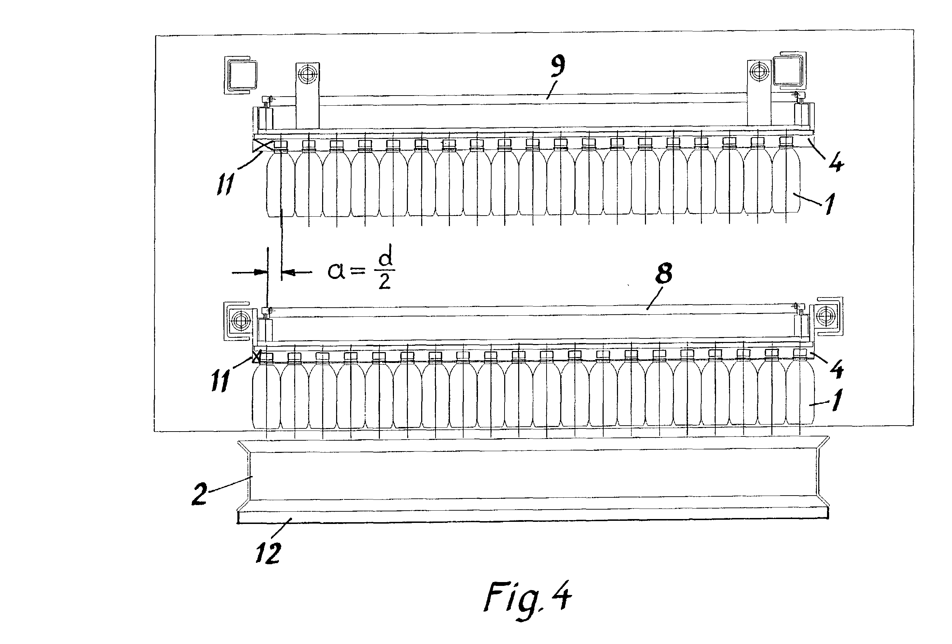

gegeneinander versetzt sind, wie in Fig. 4 gezeigt ist. Gemäß Fig. 5 sind die Greiferleisten 4 in dem unteren und dem oberen Greiferkopf 8 bzw. 9 unter einem gegenseitigen Abstand von

$$c = \sqrt{3} \times d$$

angeordnet, und die Greiferleisten 4 des unteren und des oberen Greiferkopfes 8 bzw. 9 sind um einen Abstand

$$b = \sqrt{3} \times d/2$$

gegeneinander versetzt. In dem in den Fig. 4 und 5 gezeigten Beschickungszustand der Greiferleisten 4 sind der untere und der obere Greiferkopf 8 bzw. 9 unter einem vertikalen Abstand angeordnet, der größer ist als die Höhe der Flaschen 1. Bei dem in den Zeichnungen dargestellten Ausführungsbeispiel ist ein Zentrierrahmen 2 mit einer Platte 12 unter den beiden höhenverstellbaren Greiferköpfen 8 und 9 in einer konstanten Höhenlage angeordnet. Es wäre aber auch möglich, den unteren Greiferkopf 8 in einer konstanten Höhenlage anzuordnen und den Zentrierrahmen und die Platte 12 auf einer Hubvorrichtung anzuordnen.

In den Fig. 4 und 5 ist die Vorrichtung in einem Zustand gezeigt, nachdem die in dem unteren und dem oberen Greiferkopf 8 bzw. 9 angeordneten Greiferleisten 4 von den zugeordneten Zuführförderern 5 mit Flaschen 1 beschickt wurden. Zunächst wird der untere Greiferkopf 8 abgesenkt, um die die unteren Reihen einer Lage oder Schicht bildenden Flaschen 1 auf die Platte 12 abzusetzen. Gleichzeitig oder mit einer gewissen Verzögerung wird der obere Greiferkopf 9 abgesenkt. Die von den Greiferleisten 4 des oberen Greiferkopfes 9 gehaltenen Flaschen 1 dringen daher zwischen die auf die Platte 12 abgesetzten Flaschen 1 ein. Die Körper der von dem oberen Greiferkopf 9 gehaltenen Flaschen 1 werden daher von den konischen Halsbereichen der von dem unteren Greiferkopf 8 gehaltenen Flaschen 1 geführt und falls erforderlich in eine vertikale Lage gebracht. Aufgrund der Tatsache, daß das Eintauchen der Flaschen der oberen Reihen in die Flaschen der auf der Platte 12 angeordneten unteren Reihen mit einer geführten Bewegung erfolgt, kann das Zusammenführen der Flaschen in eine verdichtete Schicht mit hoher Geschwindigkeit zuverlässig durchgeführt werden.

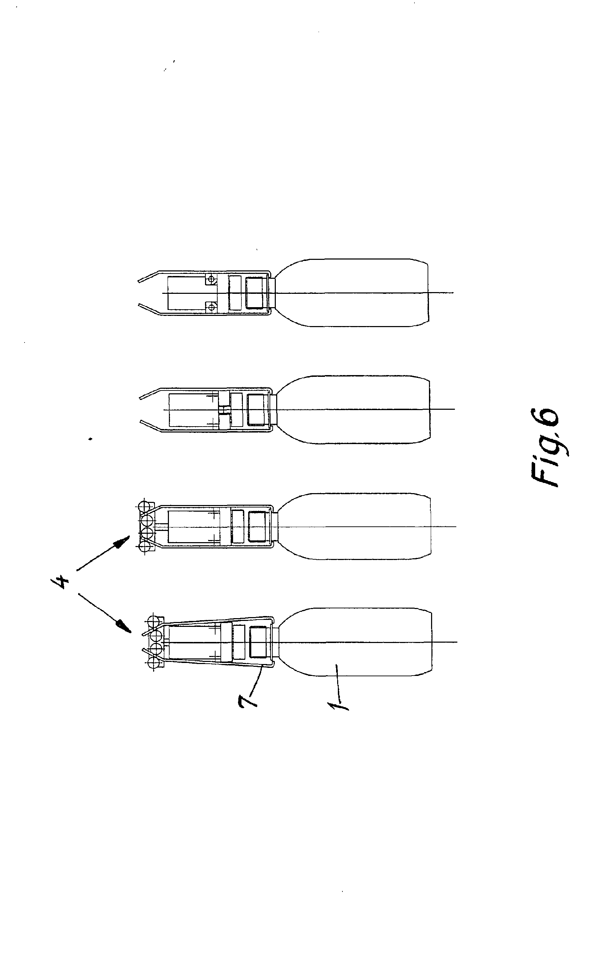

Nachdem alle Flaschen auf der Platte 12 abgesetzt wurden, werden die Greifarme 7 aller Greiferleisten 5 mittels (nicht gezeigter) Antriebe gespreizt, so daß sie den Kragen 3 der Flaschen 1 freigeben, wie in Fig. 6 gezeigt. Daraufhin werden die beiden Greiferköpfe 8 und 9 angehoben, und auf die gebildete Schicht von Flaschen wird eine Zwischenlage aufgelegt, auf der die nächste Schicht abgesetzt werden kann. Die beiden Greiferköpfe 8 und 9 werden mit den in einer unterschiedlichen Höhenlage angeordneten Zuführförderern 5 zur Deckung gebracht, um die Greiferleisten 4 erneut mit Flaschen 1 zu beschicken. Daraufhin werden die vorstehend beschriebenen Vorgänge wiederholt, um eine weitere Schicht von Flaschen auf die bereits gebildete Schicht bzw. die darauf angeordnete Zwischenlage abzusetzen.

Das Entstapeln oder Entpalettieren kann in umgekehrter Reihenfolge durchgeführt werden. Zum Überführen der in den Greiferleisten 4 hängenden Flaschen 1 in den Abzugsförderer 6 können (nicht gezeigte) Querförderer vorgesehen sein.

Die beiden Greiferköpfe 8 und 9, die Greiferleisten 4 und der (nicht gezeigte) Querförderer können mit zugeordneten Antrieben mit einer geeigneten Steuerung versehen sein, um einen automatischen Be- bzw. Entpalettiervorgang zu ermöglichen.

Für den Fachmann ist erkennbar, daß die vorstehend beschriebene Vorrichtung auch geeignet ist, um Schichten aus Behältern zu bilden, die nicht rotationssymmetrisch sind. Es kommt nur darauf an, daß zumindest ein Endbereich der Behälter eine sich verjüngende Form aufweist. Im übrigen ist auch eine Anordnung der Behälterreihen ohne Versatz, d. h. a = 0, möglich.

Bezugszeichenliste:

| | |
|---|---|
| 1 | Flaschen |
| 2 | Zentrierrahmen |
| 3 | Kragen |
| 4 | Greiferleiste |
| 5 | Zuführförderer |
| 6 | Abzugsförderer |

7    Greifarme
8    unterer Greiferkopf
9    oberer Greiferkopf
10   Gestell
11   Anschläge
12   Platte

**Patentansprüche**

1. Verfahren zur Bildung einer Schicht aus zwei oder mehr Reihen von Behältern, die einen sich verjüngenden Endbereich aufweisen, bei dem die Behälter in Reihen zugeführt werden und die Behälter der benachbarten Reihen in Zuführrichtung in einem Abstand a>=0 gegeneinander versetzt hängend angeordnet werden und die Behälter der Reihen sodann einander angenähert werden, **dadurch gekennzeichnet, daß** die Reihen in vertikaler Richtung einen Abstand aufweisen, der größer ist als die Höhe der Behälter und ihr horizontaler Abstand quer zur Zuführrichtung dem Abstand b benachbarter Reihen in der zu bildenden Schicht entspricht, und daß die Behälter der Reihen in vertikaler Richtung einander angenähert werden, bis sie in einer gemeinsamen horizontalen Ebene angeordnet sind, wobei die Behälter bei der Annäherung von ihren sich verjüngenden Endbereichen geführt und zentriert werden.

2. Verfahren nach Anspruch 1, **dadurch gekennzeichnet, daß** die Reihen einer Schicht abwechselnd in einer oberen und einer unteren Ebene angeordnet werden, wobei der horizontale Abstand c benachbarter Reihen in den beiden Ebenen doppelt so groß ist als der Abstand b benachbarter Reihen in der zu bildenden Schicht, und daß die Behälter der Reihen in vertikaler Richtung einander angenähert werden, bis sie in einer gemeinsamen horizontalen Ebene angeordnet sind.

3. Vorrichtung zur Durchführung des Verfahrens nach Anspruch 1, **gekennzeichnet durch** mindestens zwei Greiferleisten (4), denen jeweils ein Zuführförderer (5) zugeordnet ist, der die Behälter (1) so zuführt, daß die Behälter der in den zwei Greiferleisten gebildeten Reihen um einen Abstand a>=0 in Förderrichtung gegeneinander versetzt sind, daß die mindestens zwei Zuführförderer in vertikaler Richtung einen Abstand aufweisen, der größer ist als die Höhe der Behälter, daß die benachbarte Reihen von Behältern aufnehmenden Greiferleisten in horizontaler Richtung einen Querabstand b haben, der dem Abstand benachbarter Reihen in der zu bildenden Schicht entspricht, und daß diese Greiferleisten in vertikaler Richtung relativ zueinander beweglich sind und in einer gemeinsamen Ebene angeordnet werden können, um die mindestens zwei benachbarten Reihen von Behältern auf eine Unterlage (12) beispielsweise Palette abzusetzen.

4. Vorrichtung nach Anspruch 3, **dadurch gekennzeichnet, daß** die Unterlage (12) in horizontaler Richtung taktweise um einen Weg bewegbar ist, der zumindest doppelt so groß ist als der Abstand b benachbarter Reihen in der zu bildenden Schicht

5. Vorrichtung nach Anspruch 3, **dadurch gekennzeichnet, daß** die Greiferleisten (4) zur Bildung einer ganzen Lage abwechselnd in einer unteren und einer oberen Eben angeordnet sind, wobei die Greiferleisten einer Ebene einen horizontalen Abstand c haben, der doppelt so groß ist als der Abstand b benachbarter Reihen in der zu bildenden Schicht, und daß diese Greiferleisten in vertikaler Richtung relativ zueinander beweglich sind und in einer gemeinsamen Ebene angeordnet werden können, um alle Reihen von Behältern (1) auf eine Unterlage (12), beispielsweise Palette abzusetzen.

6. Vorrichtung nach Anspruch 3 oder 5, **dadurch gekennzeichnet, daß** die Greiferleisten (4) bewegbare Greifarme (7) aufweisen.

7. Vorrichtung nach Anspruch 6, **dadurch gekennzeichnet, daß** den Greiferleisten (4) in einer Ebene mindestens ein Abzugsförderer (6) zugeordnet ist.

8. Vorrichtung nach Anspruch 3 oder 5, **dadurch gekennzeichnet, daß** der Abstand der Greiferleisten (4) manuell oder automatisch verstellt werden kann zur Anpassung an verschiedene Durchmesser und Höhen der Behälter (1).

9. Vorrichtung nach Anspruch (5) **dadurch gekennzeichnet, daß** die Greiferleisten (4) der beiden Ebenen taktweise in horizontaler Richtung bewegbar sind, um die Greiferleisten nacheinander mit den zugeordneten Zuführförderern (5) zur Deckung zu bringen.

10. Vorrichtung nach Anspruch 3 oder 5, **dadurch gekennzeichnet, daß**, wenn der Abstand b ungleich dem Abstand der Zuführförderer (5) ist, die Greiferleisten (4) der einen Ebene auch horizontal relativ zu den Greiferleisten der anderen Ebene beweglich sind zur Anpassung an den Abstand der Zuführförderer.

11. Vorrichtung zur Durchführung des Verfahrens nach Anspruch 1, **gekennzeichnet durch** eine Greiferleiste, einen der Greiferleiste zugeordneten Zuführförderer und eine taktweise horizontal verfahrbare Unterlage, wobei die Greiferleiste von der Unterlage einen vertikalen Abstand aufweist, der größer ist als die zweifache Höhe der Behälter, und wobei die Unterlage in horizontaler Richtung taktweise quer zur Greiferleiste um den Abstand b benachbarter Reihen der zu bildenden Schicht verfahrbar ist.

12. Vorrichtung nach Anspruch 11, **dadurch gekennzeichnet, daß** die Greiferleiste zum Absetzen der Behälter (1) relativ zur Unterlage (12) vertikal bewegbar ist.

$$b = \frac{d}{2} \sqrt{3}$$

_Fig. 1_

$a$

$\frac{d}{2}$

_6_

_4_

_5_

_Fig. 2_

_1_

_4, 6_

_Fig. 3_

_3_

_1_

$$a = \frac{d}{2}$$

Fig. 4

Fig. 5

$$c = 2b \qquad b = \frac{d}{2}\sqrt{3}$$

EP 1 262 432 A2

Fig.6

EP 1 262 432 A2